# EUROPEAN PATENT APPLICATION

(11) **EP 4 813 617 A1**
(43) Date of publication of application: **30.09.2026**
(21) Application number: 24893415.0
(22) Date of filing: 19.11.2024
(51) Int. Cl.: B29C 70/52

(54) **PREFORMING TOOLING AND PREFORMING METHOD**

(30) Priority: 21.11.2023 CN 202311561413; 21.11.2023 CN 202311561427; 21.11.2023 CN 202323147548 U
(71) Applicant: CRRC QINGDAO SIFANG CO., LTD., Qingdao, Shandong 266111 (CN)
(72) Inventor: XIA, Yuanping, Qingdao, Shandong 266111 (CN); CHEN, Xu, Qingdao, Shandong 266111 (CN); SUN, Lin, Qingdao, Shandong 266111 (CN); CAO, Yazhou, Qingdao, Shandong 266111 (CN); GE, Jiwen, Qingdao, Shandong 266111 (CN)
(74) Representative: Prinz & Partner mbB
(86) International application number: PCT/CN2024/132913
(87) International publication number: WO 2025/108258

(57) **Abstract**

Disclosed in the present invention are a preforming tooling and a preforming method. The preforming tooling comprises preforming mold sets, each preforming mold set comprises at least one preforming mold, a plurality of preforming molds are sequentially arranged from front to back, and the same set of preforming molds are used for forming the same part structure of a product. Each preforming mold is provided with a flared tubular protrusion, an internal cavity is formed in the protrusion, and the internal cavity comprises a core mold accommodating area and a fabric preforming area on the periphery; a core mold clearance portion and fabric guide openings are provided on the front side wall of the preforming mold, the core mold clearance portion corresponds to the core mold accommodating area, the fabric guide openings correspond to the fabric preforming area, and a rear port of the internal cavity is a cavity outlet; and in the same set of preforming molds from front to back, the circumferential length of the fabric guide openings is gradually increased, and the cross sectional area of the cavity outlet is gradually increased. According to the present invention, the flared tubular preforming molds are used, so that the structural strength is increased, and the molds are not prone to tensile damage; and one preforming mold is used for forming a layer of fabric, so that the size matching is ensured, and fabric is not prone to shifting, thus improving the forming effect.

## Description

The present application claims priorities to Chinese Patent Application No. 202311561413.2, titled "PREFORMING TOOLING AND PREFORMING METHOD", Chinese Patent Application No. 202311561427.4, titled "PREFORMING MOLD", and Chinese Patent Application No. 202323147548.2, titled "MAGNETIC ATTRACTION DEVICE AND PREFORMING MOLD FOR COMPOSITE PULTRUSION", filed on November 21, 2023 with the China National Intellectual Property Administration, all of which are incorporated herein by reference in their entireties.

### FIELD

The present application relates to the technical field of pultrusion, and in particular, to a preforming tooling and a preforming method.

### BACKGROUND

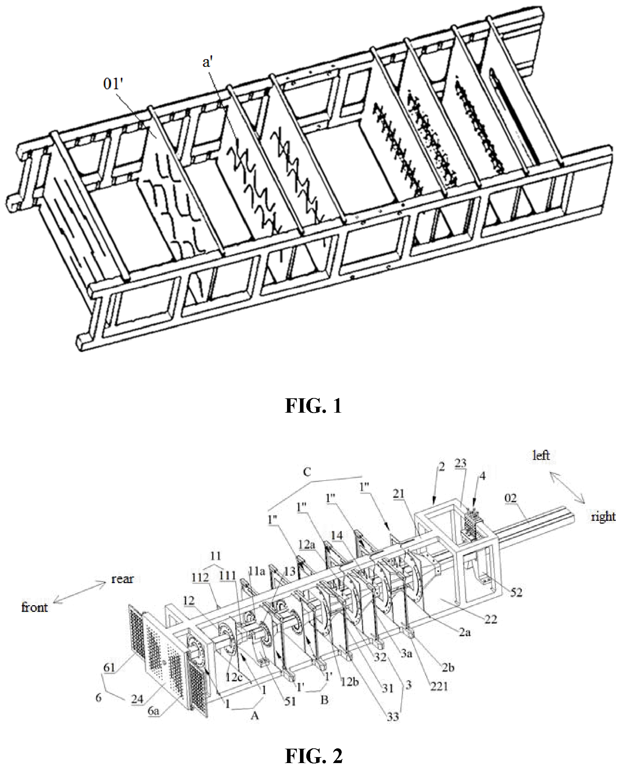

A preforming tooling for pultrusion in the convention technology, as shown in FIG. 1, includes multiple preforming plates 01' arranged sequentially from front to back. The preforming plates 01' are respectively formed with fabric passing openings a' of different curvatures. Fabric, passing through the respective fabric passing openings a' in the preforming plates 01', is progressively formed into the shape of a core mold under the action of the multiple preforming plates 01'.

As can be seen from FIG. 1, when a product is required to have multiple internal cavities, multiple fabric passing openings a' are formed on the preforming plates 01', which results in the individual preforming plate 01' having a reduced strength and being prone to be damaged during pultrusion. Additionally, in practical applications, a member is formed typically by pultruding multiple layers of fabric, with the width of each layer of fabric increasing progressively from inner to outer layers. However, in the preforming tooling for pultrusion in the convention technology, all layers of fabric pass through uniformly sized fabric passing openings a' for formation. It can be understood that to meet requirements for forming an outermost layer of fabric, the fabric passing opening a' of the outer layers is sized larger relative to that of the inner layers, which may cause the inner layers of fabric to shift during forming, resulting in suboptimal forming quality and consequently adversely affecting structural strength of the formed product.

Therefore, a technical issue urgently to be addressed by those skilled in the art is how to provide a preforming tooling and a preforming method that enhances structural strength of the tooling to prevent damage during pultrusion and improves fabric forming quality to ensure structural strength of the formed product.

### SUMMARY

An object of the present application is to provide a preforming tooling and a preforming method that enhances structural strength of the tooling to prevent damage during pultrusion and improves fabric forming quality to ensure structural strength of the formed product.

To address the above technical issue, a preforming tool is provided according to the present application, including at least one preforming mold set. Each preforming mold set includes one or more preforming molds arranged sequentially from front to back and configured to form the same structural portion of a product.

Each preforming mold has a protrusion extending from front to back and shaped as an axially-through flared tube, with its cross-sectional area decreasing gradually from front to back. An internal cavity is formed inside the protrusion, which includes a core-mold accommodating zone and a fabric preforming zone located around the core-mold accommodating zone. The preforming mold is formed at its front side wall with a core-mold clearance portion and a fabric guide opening extending circumferentially along the core-mold clearance portion, with the core-mold clearance portion corresponding to the core-mold accommodating zone and the fabric guide opening corresponding to the fabric preforming zone. The internal cavity has a cavity outlet at its rear end opening, and in the same set of preforming molds from front to back, circumferential lengths of multiple fabric guide openings are progressively increased, and cross-sectional areas of multiple cavity outlets are progressively increased.

Optionally, the preforming mold includes a preforming plate and an adjustment plate, the preforming plate has a central portion that extends from front to back to form the protrusion, and the adjustment plate is formed with the core-mold clearance portion and the fabric guide opening, and is connected to a front side wall of the preforming plate in a circumferentially adjustable manner.

Optionally, the fabric guide opening is an arc-shaped hole, the internal cavity has a cavity inlet at its front end opening, and a contour line of the cavity inlet is in a matching arc shape at least at a position corresponding to the fabric guide opening.

Optionally, the preforming mold set includes a central-cavity preforming mold set, and the preforming mold in the central-cavity preforming mold set is configured as a central-cavity preforming mold. The internal cavity formed inside the protrusion of the central-cavity preforming mold has a circular cavity inlet at its front end opening. The core-mold clearance portion in the adjustment plate is of a hole-like structure matching in shape with the cavity outlet.

Optionally, the preforming mold set further includes an external-contour preforming mold set, and the preforming mold in the external-contour preforming mold set is configured as an external-contour preforming mold. The internal cavity formed inside the protrusion of the external-contour preforming mold has a circular cavity inlet at its front end opening. The core-mold clearance portion in the adjustment plate is of a hole-like structure matching in shape with the cavity outlet. The adjustment plate is formed with two fabric guide openings positioned on left and right sides of the core-mold clearance portion.

Optionally, the external-contour preforming mold set includes multiple external-contour preforming molds, and each of alternating external-contour preforming molds is interrupted circumferentially to form an observation region at each interruption location.

Optionally, the protrusion is formed with an adhesive injection port at an end close to the cavity outlet. The protrusion is formed with a reservoir in its inner wall at the end close to the cavity outlet, the reservoir extends circumferentially along the protrusion, and the adhesive injection port is in communication with the reservoir.

Optionally, in both the central-cavity preforming mold and the external-contour preforming mold, the preforming plate includes a first plate part and a second plate part arranged laterally, the first plate part is formed with a first notched cavity, the second plate part is formed with a second notched cavity, and the internal cavity is defined by the first notched cavity and the second notched cavity when the first plate part and the second plate part are mated together.

Optionally, the preforming mold set includes a both-side-cavity preforming mold set, and the preforming mold in the both-side-cavity preforming mold set is configured as a both-side-cavity preforming mold. In the both-side-cavity preforming mold, the protrusion is internally partitioned into a core-mold clearance cavity and two internal cavities connected on left and right sides of the core-mold clearance cavity respectively. There are two adjustment plates positioned in one-to-one correspondence with the internal cavities, each adjustment plate is formed with a notch having an open end, the core-mold clearance portion is partially defined by the notch, and the notch is oriented toward the core-mold clearance cavity when the adjustment plate is connected to the preforming plate.

Optionally, in the both-side-cavity preforming mold, the preforming plate includes a first plate part and a second plate part arranged vertically, each of the first plate part and the second plate part is formed with a first notched cavity located centrally and a second notched cavity located on each of left and right sides of the first notched cavity, the core-mold clearance cavity is defined by corresponding first notched cavities of the first plate part and the second plate part, and the internal cavity is defined by corresponding second notched cavities of the first plate part and the second plate part.

Optionally, there are three preforming mold sets, including a central-cavity preforming mold set, a both-side-cavity preforming mold set and an external-contour preforming mold set arranged sequentially from front to back.

Optionally, the preforming plate is formed with multiple first connecting holes distributed circumferentially, and the adjustment plate is formed with multiple second connecting holes distributed circumferentially. There are connectors extending through corresponding first and second connecting holes to secure the preforming plate and the adjustment plate.

Optionally, a support frame is further included. The support frame includes an upper fixing portion and a lower fixing portion, the upper fixing portion and the lower fixing portion each are formed with a fixing slot extending laterally along the support frame through their two lateral end walls. The preforming mold is mounted between the upper fixing portion and the lower fixing portion, with upper and lower ends of the preforming plate inserted into corresponding fixing slots of the upper fixing portion and the lower fixing portion.

Optionally, the preforming mold set includes a central-cavity preforming mold set, and the preforming mold in the central-cavity preforming mold set is configured as a central-cavity preforming mold. The preforming mold set further includes an external-contour preforming mold set, and the preforming mold in the external-contour preforming mold set is configured as an external-contour preforming mold. In both the central-cavity preforming mold and the external-contour preforming mold, the preforming plate includes a first plate part and a second plate part arranged laterally, the first plate part is formed with a first notched cavity, the second plate part is formed with a second notched cavity, and the internal cavity is defined by the first notched cavity and the second notched cavity when the first plate part and the second plate part are mated together.

Each of the first plate part and the second plate part is slidable in an extension direction of the fixing slot at its upper and lower ends.

Optionally, the preforming mold set includes a both-side-cavity preforming mold set, and the preforming mold in the both-side-cavity preforming mold set are configured as a both-side-cavity preforming mold. In the both-side-cavity preforming mold, the preforming plate includes a first plate part and a second plate part arranged vertically, each of the first plate part and the second plate part is formed with a first notched cavity located centrally and a second notched cavity located on each of left and right sides of the first notched cavity, the core-mold clearance cavity is defined by corresponding first notched cavities of the first plate part and the second plate part, and the internal cavity is defined by corresponding second notched cavities of the first plate part and the second plate part.

The fixing slot for mounting the both-side-cavity preforming mold has a predetermined depth in a vertical direction, the first plate part is slidably mounted at its upper end in the fixing slot located above, and is movable vertically relative to the fixing slot located above, and the first plate part, when moved upward to a disengaged position, becomes offset vertically from a core mold.

The second plate part is slidably mounted at its lower end in the fixing slot located below, and is movable vertically relative to the fixing slot located below, and the second plate part, when moved downward to a disengaged position, becomes offset vertically from the core mold.

There is a connecting component, which is connected at one end to the support frame and is detachably connected at the other end to the first plate part or the second plate part.

Optionally, one or more fabric adjustment rods is further included, each of which is formed with a fabric slot extending vertically. Each fabric adjustment rod is mounted on the support frame in a laterally adjustable manner along the support frame, and is positioned in front of a corresponding preforming mold.

Optionally, a core-mold fixing part and a magnetic attraction device is further included. The core-mold fixing part is mounted on the support frame for fixing a core mold, the magnetic attraction device is mounted at a rear upper end of the support frame, and includes a magnetic mechanism for magnetically attracting a tail end of the core mold in a height-adjustable manner.

Optionally, the magnetic attraction device further includes a mounting base and an adjustment component. The mounting base is formed with a mounting cavity with an open lower end, the adjustment component is connected to a closed end wall of the mounting cavity, and the adjustment component has a lower end wall forming a support wall, which is positioned inside the mounting cavity in a height-adjustable manner. The support frame is provided with a support beam at its upper rear end, which is positioned inside the mounting cavity and is in abutment with the support wall at its upper side wall, and the magnetic mechanism is connected to an outer side wall of the mounting base in a height-adjustable manner.

Optionally, the closed end wall of the mounting cavity is formed with a threaded hole, and the adjustment component includes an adjustment bolt that is threaded into the threaded hole.

Optionally, there are two magnetic mechanisms, which are respectively connected to outer sides of two side walls of the mounting cavity.

Optionally, a transition base is further included. The magnetic mechanism is fixed to the transition base, the transition base is connected to the mounting base in a height-adjustable manner, and the transition base is configured to be fixed relatively to the mounting base when adjusted to a predetermined height.

Optionally, the transition base includes a first connecting portion and a second connecting portion joined at a right angle, the first connecting portion extends horizontally and the second connecting portion extends vertically, the magnetic mechanism is fixed to the first connecting portion, and the second connecting portion is adapted to connect with the mounting base.

Optionally, each side wall of the mounting cavity is formed with multiple third connecting hole sets distributed vertically, each having one or more third connecting holes distributed horizontally.

The second connecting portion is formed with at least one fourth connecting hole, there is at least one fastener extending through a corresponding fourth connecting hole and any one of the third connecting holes to secure the second connecting portion to the mounting base.

Optionally, the fastener includes a fastening bolt and a fastening nut, the fastening bolt extends through the corresponding fourth connecting hole and third connecting hole, and the fastening nut is threaded to the fastening bolt.

Optionally, at least one connector is further included. The magnetic mechanism is fixed to the first connecting portion via the connector.

Optionally, the first connecting portion is formed with at least one through hole, the magnetic mechanism is formed with at least one threaded connecting hole, and the connector includes a connecting bolt, which extends through the through hole and is threaded into a corresponding threaded connecting hole.

Optionally, the core-mold fixing part includes a core-mold adjustment base located at a rear end and formed with an accommodation hole, the core mold is inserted at its rear end into the accommodation hole, and in a theoretical installation state, a predetermined clearance exists between an inner peripheral wall of the accommodation hole and a corresponding end wall of the core mold.

Optionally, a fabric inlet plate is further included, which is positioned in front of each preforming mold. The fabric inlet plate has one or more fabric inlets, and each fabric guide opening is arranged corresponding to one of the fabric inlets.

A preforming method using the preforming tooling as described above. In the same preforming mold set, each preforming mold is configured to pre-form one layer of fabric. During operation, an innermost layer of fabric is pre-formed through a foremost preforming mold, and then an adjacent outer layer of fabric is pre-formed through an adjacent rearward preforming mold, and so on, sequentially forming from inner to outer layers.

The present application proposes an entirely novel preforming tooling. Each preforming mold has a flared tubular protrusion. An internal cavity is formed inside the protrusion. Peripheral walls defining the internal cavity are used to pre-form an external contour of the fabric. Each preforming mold has a core-mold clearance portion for accommodating the core mold and a fabric guide opening. During operation, the core mold extends through the core-mold clearance portion of the preforming mold and is installed in the core mold accommodating zone of the internal cavity. The core mold is configured to pre-form an internal contour of the fabric. A fabric preforming zone is located around the core-mold accommodating zone. The fabric guide opening is located corresponding to the fabric preforming zone and allows the fabric to pass through. Thus, a gap between the peripheral wall forming the internal cavity and an outer peripheral wall of the core mold may be adaptively adjusted based on the thickness of the fabric. During preforming, the fabric passes through the fabric guide opening into the internal cavity under traction force, undergoes preforming under the combined action of the peripheral walls defining the internal cavity and the core mold, and is leaded out from the cavity outlet. It can be understood that the fabric leaded out from the cavity outlet is wrapped around an outer periphery of the core mold, meaning each preforming mold can complete the preforming of one layer of fabric.

Furthermore, when leaded out from each preforming mold, the fabric is wrapped around the outer periphery of the core mold. Accordingly, compared with the core mold passing through a forward preforming mold, the core mold passing through an adjacent rearward preforming mold is thickened by approximately one layer of fabric. Correspondingly, compared with the cavity outlet of the forward preforming mold, the cavity outlet of the adjacent rearward preforming mold is also thickened by approximately one layer of fabric. In other words, in the same set of preforming molds from front to back, the cross-sectional areas of the multiple cavity outlets are progressively increased. Moreover, to ensure optimal forming quality for each layer of fabric and prevent fabric shifting or other issues during preforming, the circumferential length of the fabric guide opening in each preforming mold is matched to the width of the corresponding fabric. Since an outer layer of fabric is necessarily wider than an inner layer of fabric, the circumferential lengths of the multiple fabric guide openings in the same set of preforming molds from the front to the rear are also progressively increased. In this way, after preforming the inner layer of fabric, an adjacent outer layer of fabric is pre-formed through an adjacent rearward preforming mold, and so on, sequentially forming from inner to outer layers.

As described above, instead of flat preforming plates as used in the conventional technology, flared tubular preforming molds are used in the preforming tooling according to the present application. The flared tube is configured to extend in a pulling direction of the fabric, significantly enhancing the structural strength of the preforming mold and reducing the risk of damage during pultrusion. Further, since each preforming mold is used to form a single layer of fabric, the structural dimension of each mold, such as the fabric guide opening and the internal cavity, are matched to the dimension of the corresponding fabric, which prevents the fabric from shifting during passage through the respective preforming mold, thereby improving fabric forming quality and ensuring the structural strength of the formed product.

### BRIEF DESCRIPTION OF THE DRAWINGS

FIG. 1 is a schematic structural view of preforming molds in the conventional technology;
FIG. 2 is a schematic structural view of a preforming tooling according to an embodiment of the present application;
FIG. 3 is a schematic view of an innermost fabric being pre-formed through a central cavity;
FIG. 4 is a schematic structural view of a product formed by the preforming tooling according to the present application;
FIG. 5 is a schematic structural view of a central-cavity preforming mold in the preforming tooling shown in FIG. 2;
FIG. 6 is another schematic structural view of the preforming mold shown in FIG. 5;
FIG. 7 is yet another schematic structural view of the preforming mold shown in FIG. 5;
FIG. 8 is still another schematic structural view of the preforming mold shown in FIG. 5;
FIG. 9 is a schematic structural view of a first implementation of an external-contour preforming mold in the preforming tooling shown in FIG. 2;
FIG. 10 is another schematic structural view of the preforming mold shown in FIG. 9;
FIG. 11 is yet another schematic structural view of the preforming mold shown in FIG. 9;
FIG. 12 is still another schematic structural view of the preforming mold shown in FIG. 9;
FIG. 13 is a schematic structural view of a second implementation of the external-contour preforming mold in the preforming tooling shown in FIG. 2;
FIG. 14 is a schematic structural view of a both-side-cavity preforming mold in the preforming tooling shown in FIG. 2;
FIG. 15 is another schematic structural view of the preforming mold shown in FIG. 14;
FIG. 16 is yet another schematic structural view of the preforming mold shown in FIG. 14;
FIG. 17 is still another schematic structural view of the preforming mold shown in FIG. 14;
FIG. 18 is another schematic structural view of the preforming mold shown in FIG. 14;
FIG. 19 is a schematic structural view of a support frame in the preforming tooling shown in FIG. 2;
FIG. 20 is another schematic structural view of the support frame shown in FIG. 19;
FIG. 21 is yet another schematic structural view of the support frame shown in FIG. 19;
FIG. 22 is still another schematic structural view of the support frame shown in FIG. 19;
FIG. 23 is a schematic structural view of a fabric adjustment rod in the preforming tooling shown in FIG. 2;
FIG. 24 is another schematic structural view of the fabric adjustment rod in FIG. 23;
FIG. 25 is a schematic structural view of a magnetic attraction device in the preforming tooling shown in FIG. 2;
FIG. 26 is another schematic structural view of the magnetic attraction device shown in FIG. 25;
FIG. 27 is yet another schematic structural view of the magnetic attraction device shown in FIG. 25;
FIG. 28 is still another schematic structural view of the magnetic attraction device shown in FIG. 25;
FIG. 29 is a schematic structural view of a core-mold adjustment base in the preforming tooling shown in FIG. 2; and
FIG. 30 is another schematic structural view of the preforming tooling shown in FIG. 2.

Reference numerals in FIG. 1 are listed as follows:

| | |
|---|---|
| 01'. preforming plate; | a'. fabric passing opening; |

Reference numerals in FIGS. 2 to 30 are listed as follows:

| | | | |
|---|---|---|---|
| a. | central-cavity preforming mold set; | b. | both-side-cavity preforming mold set; |
| c. | external-contour preforming mold set; | 1**.** | central-cavity preforming mold; |
| 1'. | external-contour preforming mold; | 1". | both-side-cavity preforming mold; |
| 11. | preforming plate; | 111 | protrusion; |
| 111a. | internal cavity; | 111 | core-mold clearance cavity; |
| a. | reservoir; | H. | observation region; |
| 112. | base plate part; | 11a. | first connecting hole; |
| 12. | adjustment plate; | 12a. | core-mold clearance portion; |
| 12b. | fabric guide opening; | 12c. | second connecting hole; |
| 13. | connector; | 14. | adhesive injection port; |
| 2. | support frame; | 21. | upper fixing portion; |
| 22. | lower fixing portion; | 2a. | fixing slot; |
| 23. | support beam; | 221. | protruding portion; |
| 2b. | mounting slot; | 2c. | fixing hole; |
| 24. | front end plate; | 3. | fabric adjustment rod; |
| 31. | vertical rod part; | 32. | horizontal rod part; |
| 33. | stopper; | 3a. | fabric slot; |
| 4. | magnetic attraction device; | 41. | magnetic mechanism; |
| 42. | mounting base; | 42a. | mounting cavity; |
| 421. | closed end wall; | 422. | side wall; |
| 42b. | threaded hole; | 42c. | third connecting hole; |
| 43. | adjustment bolt; | 44. | transition base; |
| 441. | first connecting portion; | 442. | second connecting portion; |
| 44a. | fourth connecting hole; | 451. | fixing bolt; |
| 452. | fixing nut; | 46. | connecting bolt; |
| 51. | core-mold support base; | 52. | core-mold adjustment base; |
| 52a. | accommodation hole; | 6. | fabric inlet plate; |
| 61. | extension plate; | 6a. | fabric inlet; |
| 01. | product; | 01a. | central cavity; |
| 01b. | side cavity; | 02. | core mold; |
| 03. | fabric. | | |

### DETAILED DESCRIPTION OF THE EMBODIMENTS

In order to provide those skilled in the art with better understanding of the solutions of the present application, the present application is described hereinafter in further detail with reference to the accompanying drawings and embodiments.

The term "multiple" used herein generally refers to a plural indefinite number or quantity, usually two or more. When the term "multiple" is used to indicate the quantity of certain components, it does not imply that these components are quantitatively related to each other.

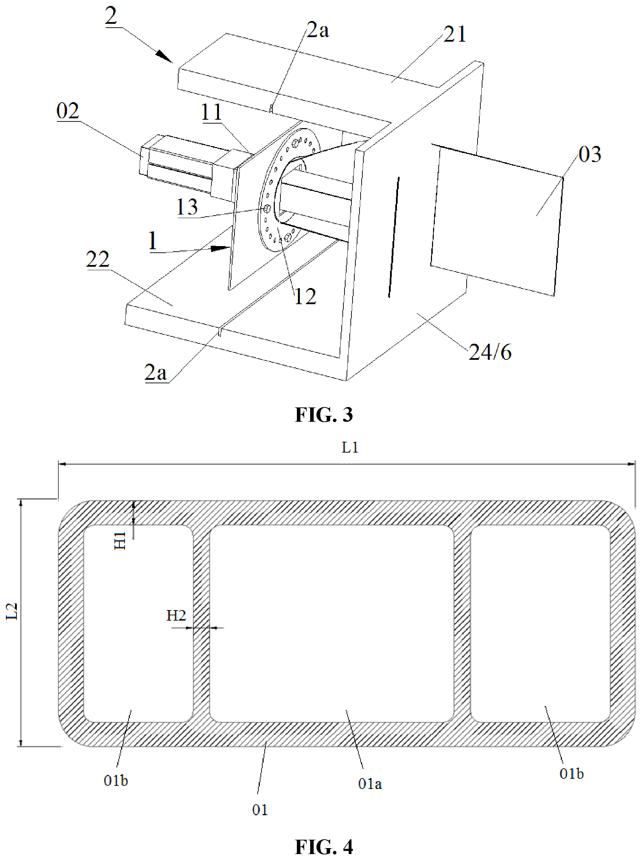

References are made to FIGS. 2 to 4. FIG. 2 is a schematic structural view of a preforming tooling according to an embodiment of the present application, FIG. 3 is a schematic view showing preforming of an innermost fabric with a central cavity, and FIG. 4 is a schematic structural view of a product formed by the preforming tooling according to the present application.

A preforming tool is provided according to the present application, which includes three preforming mold sets arranged sequentially from front to back: a central-cavity preforming mold set A, a both-side-cavity preforming mold set B, and an external-contour preforming mold set C.

The central-cavity preforming mold set A includes two preforming molds arranged sequentially from front to back. The central-cavity preforming mold set A is configured to form a central cavity 01a of product 01.

The both-side-cavity preforming mold set B includes two preforming molds arranged sequentially from front to back. The both-side-cavity preforming mold set B is configured to form left and right side cavities 01b of product 01.

The external-contour preforming mold set C includes four preforming molds arranged sequentially from front to back. The external-contour preforming mold set C is configured to form an external contour of product 01.

Thus, the preforming tooling shown in FIG. 1 may be configured to form a three-cavity component as shown in FIG. 4. It can be understood that in practical applications, the preforming tooling may include at least one preforming mold set, depending on the type of product to be formed. For example, if the product to be formed is a single-cavity component, the preforming tooling may only include the central-cavity preforming mold set A; if the product to be formed is a two-cavity component, the preforming tooling may include two central-cavity preforming mold sets A arranged side-by-side and one external-contour preforming mold set C.

Furthermore, according to the present application, the preforming mold is specifically provided with a protrusion 111 extending from front to back. The protrusion 111 is shaped as a flared tube, with its cross-sectional area decreasing gradually from front to back. An internal cavity is formed inside the protrusion 111, which includes a core-mold accommodating zone and a fabric preforming zone located around the core-mold accommodating zone. The preforming mold is formed at its front side wall with a core-mold clearance portion 12a and a fabric guide opening 12b extending circumferentially along the core-mold clearance portion 12a, with the core-mold clearance portion 12a corresponding to the core-mold accommodating zone and the fabric guide opening 12b corresponding to the fabric preforming zone. The internal cavity defines a cavity outlet at its rear end opening. In the same set of preforming molds arranged from front to back. Circumferential lengths of multiple fabric guide openings 12b are progressively increased, and cross-sectional areas of multiple cavity outlets are progressively increased.

It can be understood that the cavity outlet should be adaptively shaped for forming a required part. For example, the central-cavity preforming mold set A is configured to form the central cavity 01a of product 01. In the three-cavity component shown in FIG. 4, the central cavity 01a is a square hole. Accordingly, each of the cavity outlets in the central-cavity preforming mold set A is a square hole, and the core mold 02 has a square cross-section.

With the above arrangement, the present application proposes an entirely novel preforming tooling. Each preforming mold has a flared tubular protrusion 111. An internal cavity is formed inside the protrusion 111. Peripheral walls defining the internal cavity are used to pre-form an external contour of the fabric 03. Each preforming mold has a core-mold clearance portion 12a for accommodating the core mold 02, and a fabric guide opening 12b. During operation, the core mold 02 extends through the core-mold clearance portion 12a of the preforming mold and is installed in the core-mold accommodating zone of the internal cavity. The core mold 02 is configured to pre-form an internal contour of the fabric 03. A fabric preforming zone is located around the core-mold accommodating zone. The fabric guide opening 12b is located corresponding to the fabric preforming zone and allows the fabric 03 to pass through. Thus, a gap between the peripheral walls forming the internal cavity and an outer peripheral wall of the core mold 02 may be adaptively adjusted based on the thickness of the fabric 03. For instance, in the case that a single layer of fabric 03 is 1.5mm thick, the gap between the peripheral walls forming the internal cavity and the outer peripheral wall of the core mold 02 may be 2mm, allowing for a certain margin relative to the thickness of the fabric 03. During preforming, the fabric 03 passes through the fabric guide opening 12b into the internal cavity under traction force, undergoes preforming under the combined action of the peripheral walls defining the internal cavity and the core mold 02, and is leaded out from the cavity outlet. It can be understood that the fabric 03 leaded out from the cavity outlet is wrapped around an outer periphery of the core mold 02, meaning each preforming mold can complete the preforming of one layer of fabric 03.

Furthermore, when leaded out from each preforming mold, the fabric 03 is wrapped around the outer periphery of the core mold 02. Accordingly, compared with the core mold 02 passing through a forward preforming mold, the core mold 02 passing through an adjacent rearward preforming mold is thickened by approximately one layer of fabric 03. Correspondingly, compared with the cavity outlet of the frontward preforming mold, the cavity outlet of the adjacent rearward preforming mold is also thickened by approximately one layer of fabric 03. In other words, in the same set of preforming molds from front to back, cross-sectional areas of multiple cavity outlets are progressively increased. Moreover, to ensure optimal forming quality for each layer of fabric 03 and prevent fabric shifting or other issues during forming, the circumferential lengths of the fabric guide openings 12b in preforming molds are matched to the corresponding widths of the fabric 03. Since an outer layer of fabric 03 is necessarily wider than an inner layer of fabric 03, circumferential lengths of the fabric guide openings 12b in the same set of preforming molds from front to back also are progressively increased. In this way, after the inner layer of fabric 03 is preformed, an adjacent outer layer of fabric 03 may be pre-formed through an adjacent rearward preforming mold, and so on, sequentially forming from inner to outer layers.

As described above, instead of flat preforming plates as used in the conventional technology, flared tubular preforming molds are used in the preforming tooling according to the present application. The flared tube is configured to extend in a pulling direction of the fabric 03, significantly enhancing the structural strength of the preforming mold and reducing the risk of damage during pultrusion. Further, since each preforming mold is used to form a single layer of fabric 03, the structural dimension of each mold, such as the fabric guide opening 12b and the internal cavity 111a, are matched to the corresponding dimension of the fabric 03, which prevents the fabric 03 from shifting during passage through the respective preforming molds, thereby improving fabric forming quality and ensuring the structural strength of the formed product.

As shown in FIG. 4, for the three-cavity component to be formed, the length of the outer contour is L1, where L1 is 210mm; the width of the outer contour is L2, where L2 is 90mm; the wall thickness of the external contour is H1, where H1 is 9mm; and the thickness of an internal rib is H2, where H2 is 6mm. When forming is performed, a fabric 03 of 1.5mm thickness is selected. Two layers of fabric 03 are needed for each cavity during the formation of the central cavity 01a and the left/right side cavities 01b, and four layers of fabric 03 are needed for forming the external contour. Therefore, in this embodiment, each of the central-cavity preforming mold set A and the both-side-cavity preforming mold set B includes two preforming molds, and the external-contour preforming mold set C includes four preforming molds. Each preforming mold is configured to form one layer of fabric 03.

It can be understood that in practical applications, the number of preforming molds in each preforming mold set is not limited, depending on dimensions of the product to be formed and the thickness of the fabric 03. Each preforming mold set may include one or more preforming molds. In the case that each preforming mold set includes multiple preforming molds, they may be arranged sequentially from front to back. A foremost preforming mold is configured to pre-form an innermost layer of fabric 03, and an adjacent rearward preforming mold is configured to pre-form an adjacent outer layer of fabric 03, and so on, sequentially forming from inner to outer layers.

Furthermore, referring to FIGS. 2 and 3, the preforming mold according to the present application includes a preforming plate 11 and an adjustment plate 12. The preforming plate 11 has a central portion that protrudes from front to back to form the aforementioned protrusion 111. The adjustment plate 12 is formed with the core-mold clearance portion 12a and the fabric guide opening 12b extending circumferentially along the core-mold clearance portion 12a. The adjustment plate 12 is connected to a front side wall of the preforming plate 11 in a circumferentially adjustable manner.

As can be seen from FIG. 1, in the conventional technology, the fabric passing opening is fixed in position, so a seaming position of layers of fabric is also fixed. When the seaming position is located precisely at a load-bearing surface of the formed product, it is possible to reduce load-bearing reliability of the product. Based on this, the preforming mold according to the present application is of a split structure including a preforming plate 11 and an adjustment plate 12. The adjustment plate 12 is connected to the preforming plate 11 in a circumferentially adjustable manner. In other words, the adjustment plate 12 is detachably connected to the preforming plate 11. After being circumferentially adjusted to a desired position, the adjustment plate 12 may be fixed relative to the preforming plate 11. Since the connection position of the adjustment plate 12 is circumferentially adjustable, the fabric guide opening 12b is also circumferentially adjustable in position. Correspondingly, the seaming position of the fabric 03 is also circumferentially adjustable. In this way, during preliminary testing, the seaming position of the fabric 03 may be adjusted by altering the connection position of adjustment plate 12 to avoid the load-bearing surface of the formed product, thereby improving the load-bearing reliability of the product.

Moreover, in the preforming tooling according to the present application, each preforming mold can complete the preforming of one layer of fabric 03, allowing operators to identify the seaming position of each layer of fabric 03. Thus, by adjusting the position of the fabric guide opening 12b in each preforming mold, the seaming positions of the layers of fabric 03 may be circumferentially misaligned, which ensures the formed product has no circumferential areas with reduced strength, thereby improving the load-bearing reliability of the product.

It can be understood that in practice, the center of the core-mold clearance portion 12a also serves as a rotational center of the adjustment plate 12. Thus, when the adjustment plate 12 is circumferentially adjusted, only the position of the fabric guide opening 12b is adjusted, while the core-mold clearance portion 12a remains unchanged in position, facilitating passage of the core mold 02.

As described above, the adjustment plate 12 is connected to the preforming plate 11 in a circumferentially adjustable manner. Specifically, in the embodiment, as shown in FIG. 2, the preforming plate 11 is formed in its front side wall with multiple first connecting holes 11a distributed circumferentially. The adjustment plate 12 is formed with multiple second connecting holes 12 also distributed circumferentially. Connectors 13 are included, which pass through corresponding first and second connecting holes 11a and 12c to secure the preforming plate 11 and the adjustment plate 12, providing reliable connection and convenient disassembly and reassembly.

In this embodiment, the adjustment plate 12 is fixed to the preforming plate 11 by three or four connectors 13. In practical applications, the number of connectors 13 is not limited, as long as the connection stability between the preforming plate 11 and the adjustment plate 12 is ensured. The connectors 13 may specifically be of a bolt or the like.

Further, in practice, fixation means of the adjustment plate 12 to the preforming plate 11 is not limited to the aforementioned connectors 13. For instance, a snap-fitting groove may be formed in the front side wall of the preforming plate 11, into which the adjustment plate 12 is inserted, abutting against the front side wall of the preforming plate 11, thereby achieving relative fixation between adjustment plate 12 and the preforming plate 11.

A plate-like structure, located at a front end of the protrusion 111, in the preforming plate 11 is defined as a base plate part 112. In practical applications, the preforming plate 11 may have an integral structure, meaning the base plate part 112 is inseparable from the protrusion 111, which allows for prefabrication of different types of preforming plates 11 as needed. The cavity outlets of these different preforming plates 11 have distinct shapes to accommodate processing requirements of products with different cavity structures.

Alternatively, the base plate part 112 and the protrusion 111 may be separate components that may be detachably secured together. Specifically, the base plate part 112 is formed with a cavity inlet hole, and the protrusion 111 is fixed to the base plate part 112 by a connector such as a bolt, aligning with the position of the cavity inlet hole. When it is required to form products with different cavity structures, only the protrusion 111 needs to be replaced. The base plate part 112 may be reused, enhancing its utilization rate and reducing costs.

Alternatively, the protrusion 111 may have axially separable parts that may be detachably secured together. A front axial part of the protrusion 111 is integrally formed with the base plate part 112, while a rear axial part of the protrusion 111 may be replaced depending on the required cavity structure of the product. Thus, when preforming products with different cavity structures, only the rear axial part of the protrusion 111 needs to be replaced, which improves the versatility of the preforming mold, further conserving resources and reducing costs.

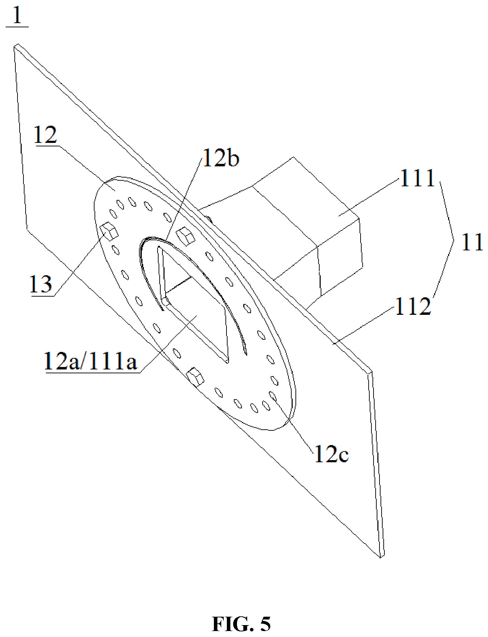

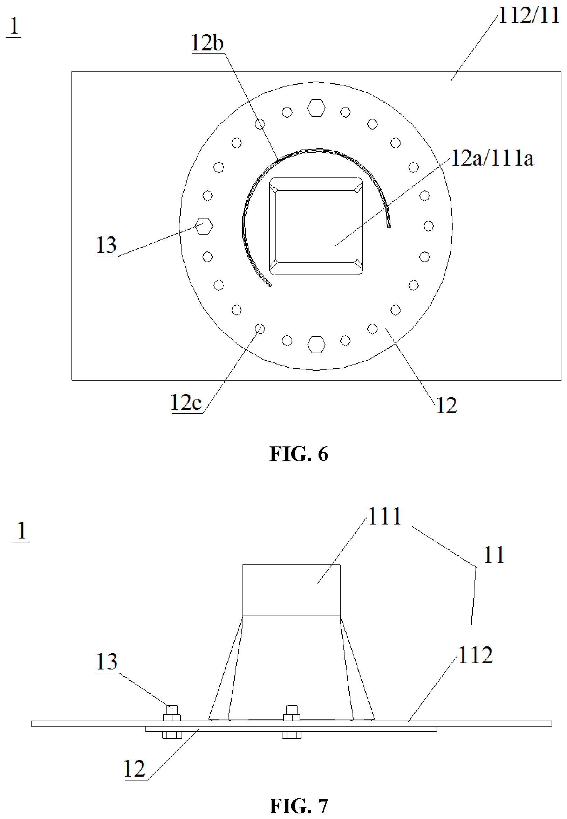

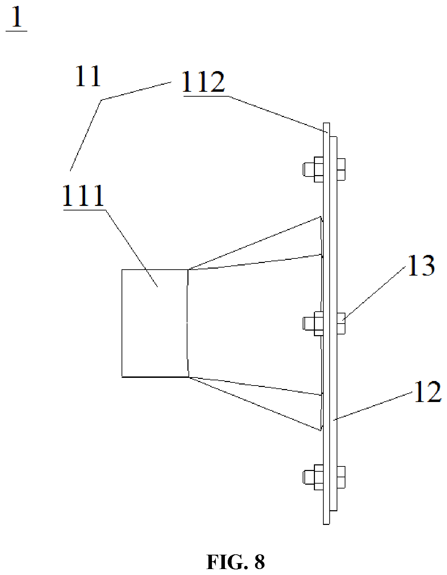

References are made to FIGS. 2, 5 to 8. FIG. 5 is a schematic structural view of a central-cavity preforming mold in the preforming tooling shown in FIG. 2, FIG. 6 is another schematic structural view of the preforming mold shown in FIG. 5, FIG. 7 is yet another schematic structural view of the preforming mold shown in FIG. 5, and FIG. 8 is still another schematic structural view of the preforming mold shown in FIG. 5.

FIGS. 5 to 8 show the preforming mold in the central-cavity preforming mold set A, configured as a central-cavity preforming mold 1. The internal cavity 111a formed inside the protrusion 111 of the central-cavity preforming mold 1 has a circular cavity inlet at its front end opening. The fabric guide opening 12b is a matching arc-shaped hole. One adjustment plate 12 is provided. The core-mold clearance portion 12a in the adjustment plate 12 is of a hole-like structure matching in shape with the cavity outlet.

The term "matching" here means that, in a projection plane parallel to the adjustment plate 12, an outer part of the contour line of the fabric guide opening 12b may coincide with the contour line of the cavity inlet, which facilitates better control over the forming of the fabric 03, enables smooth traction of the fabric 03, enhances continuous deformation of the fabric 03 during traction, and prevents the fabric 03 from shifting, wrinkling or the like during pultrusion.

In practical applications, the fabric guide opening 12b is not limited to a regular arc shape, and the contour line of the cavity inlet is not limited to a regular circular shape, as long as the cavity inlet and the fabric guide opening 12b are structurally matched at their corresponding positions.

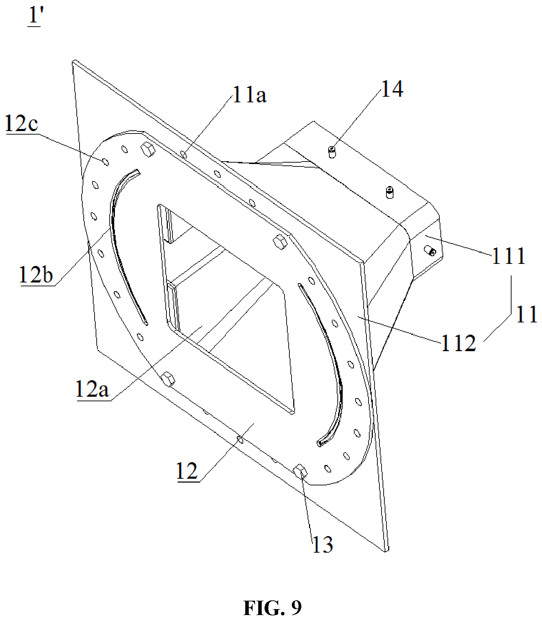

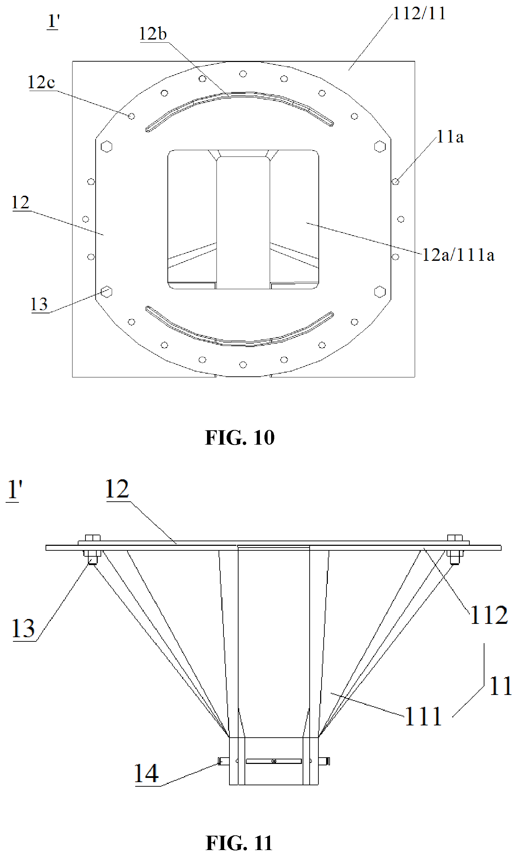

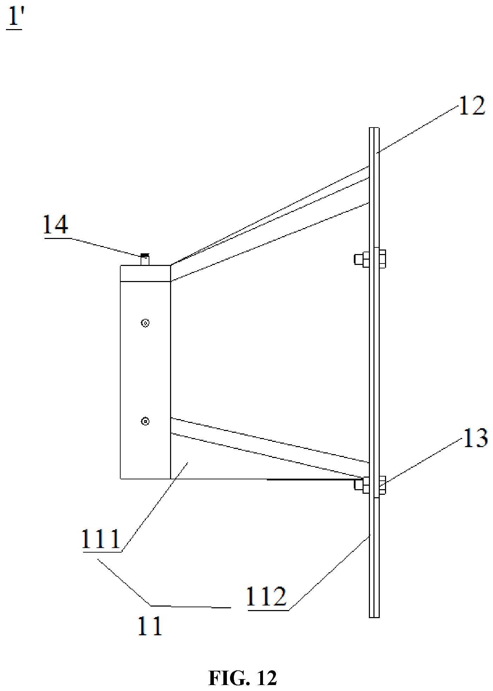

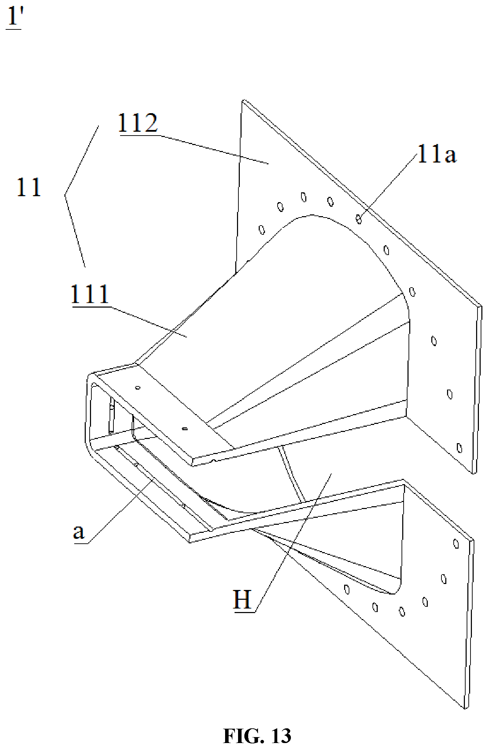

References are made to FIGS. 2, 9 to 13. FIG. 9 is a schematic structural view of an external-contour preforming mold in the preforming tooling shown in FIG. 2, FIG. 10 is another schematic structural view of the preforming mold shown in FIG. 9, FIG. 11 is yet another schematic structural view of the preforming mold shown in FIG. 9, FIG. 12 is still another schematic structural view of the preforming mold shown in FIG. 9, and FIG. 13 is a schematic structural view of a second implementation of the external-contour preforming mold in the preforming tooling shown in FIG. 2.

FIGS. 9 to 12 show the preforming mold in the external-contour preforming mold set, configured as an external-contour preforming mold 1'. The internal cavity 111a formed inside the protrusion 111 of the external-contour preforming mold 1' has a circular cavity inlet at its front end opening. One adjustment plates 12 is provided. The core-mold clearance portion 12a in the adjustment plate 12 is of a hole-like structure matching in shape with the cavity outlet. The adjustment plate 12 is formed with two fabric guide openings 12b positioned on left and right sides of the core-mold clearance portion 12a. The fabric guide opening 12b is an arc-shaped hole matching the contour line of the cavity inlet.

Similarly, the term "matching" here means that, in a projection plane parallel to the adjustment plate 12, an outer part of the contour line of the fabric guide opening 12b may coincide with the contour line of the cavity inlet, which facilitates better control over the forming of the fabric 03, enables smooth traction of the fabric 03, enhances continuous deformation of the fabric 03 during traction, and prevents the fabric 03 from shifting, wrinkling or the like during pultrusion. Moreover, the adjustment plate 12 is formed with two fabric guide openings 12b positioned on left and right sides of the core-mold clearance portion 12a, which enables separate forming of the fabrics 03 on both sides, which are then be joined at the center to form an integral piece, completing preforming of one layer of fabric 03.

Furthermore, since the flared tubular preforming molds are used according to the present application, each preforming mold occupies a relatively large space in a front-to-back direction. Therefore, to achieve a more compact overall tooling structure, shorten the length of the core mold 02, and ensure the concentricity of the core mold 02, each preforming mold is densely installed, meaning spacing between adjacent preforming molds is relatively small, which makes it inconvenient for operators to observe a closure state of the fabric 03.

Based on this, as shown in FIGS. 1 and 13, there are four external-contour preforming molds 1' in this embodiment. From front to back, the first and third external-contour preforming molds 1' each are interrupted circumferentially, forming an observation region H at the interrupted point.

The formation of the observation region H enables better observation of the closure state of the fabric 03 without increasing the length of the core mold, which ensures compact arrangement of all preforming molds while reserving sufficient adjustment space for a rear magnetic attraction device (to be detailed below). Moreover, the second and fourth external-contour preforming molds 1' maintain a circumferentially closed configuration, providing circumferential restraint to the fabric 03. Combined with the rearward traction force, this ensures preforming quality of the fabric 03.

Certainly, in practical applications, the number of external-contour preforming molds 1' is not limited. When there are multiple external-contour preforming molds 1', only each of alternating external-contour preforming molds 1' need to be interrupted circumferentially.

As shown in FIG. 9, in the external-contour preforming mold 1' according to the present application, the protrusion 111 is formed with an adhesive injection port 14 at an end close to the cavity outlet. As shown in FIG. 13, the protrusion 111 is formed with a reservoir **a** in its inner wall at the end close to the cavity outlet. The reservoir **a** extends circumferentially along the protrusion 111, and the adhesive injection port 14 is in communication with the reservoir **a**.

With this arrangement, resin or other reinforcing materials may be introduced through the adhesive injection port 14 into the reservoir **a** in the internal cavity 111a, and extends circumferentially along the protrusion 111 in the reservoir **a** to thoroughly infiltrate the fabric 03, so as to ensure stable quality of the pultruded product.

As can be seen from FIG. 13, in this embodiment, there are multiple reservoirs a formed in the inner surface of the protrusion 111 and distributed circumferentially spaced apart, with each reservoir being in communication with at least one adhesive injection port 14. It can be understood that in practical applications, the reservoirs may alternatively be interconnected as a single unit, facilitating circumferential flow of the reinforcing material.

Further, although the external-contour preforming mold 1' according to the present application is formed with the adhesive injection port 14 through which resin and other reinforcing materials may infiltrate inward from the exterior, the reinforcing materials may fail to infiltrate sufficiently inward when the cavity thickness is relatively large, which resulting in insufficient infiltration of the inner layer of fabric 03. In such cases, the core mold 02 may be formed with an adhesive injection port through which resin and other reinforcing materials may infiltrate inward from the exterior, ensuring the inner layer of fabric 03 can also be sufficiently infiltrated.

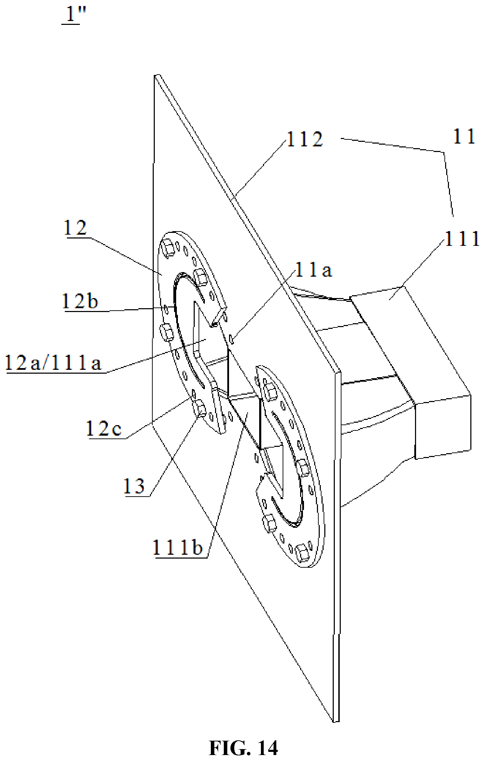

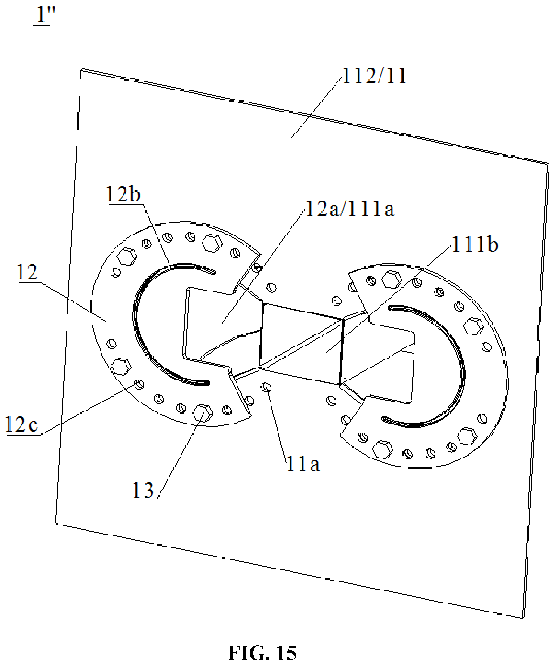

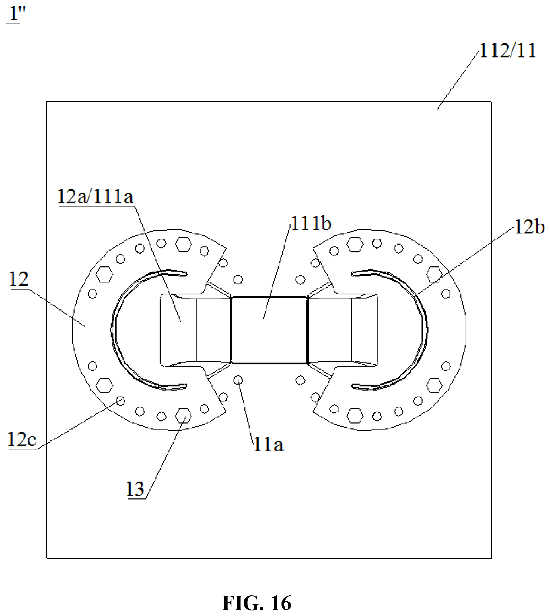

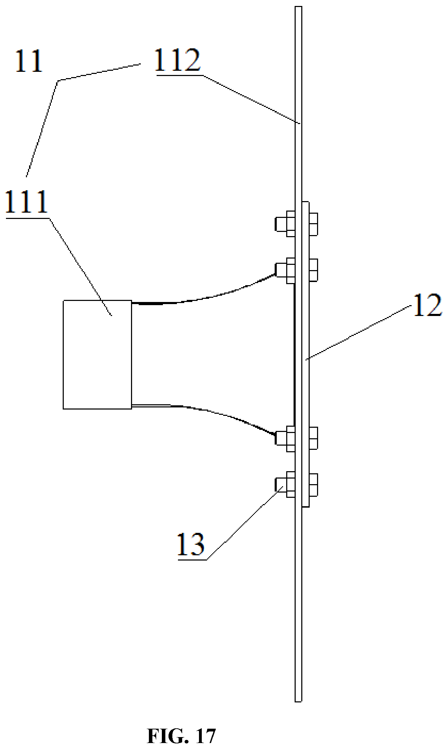

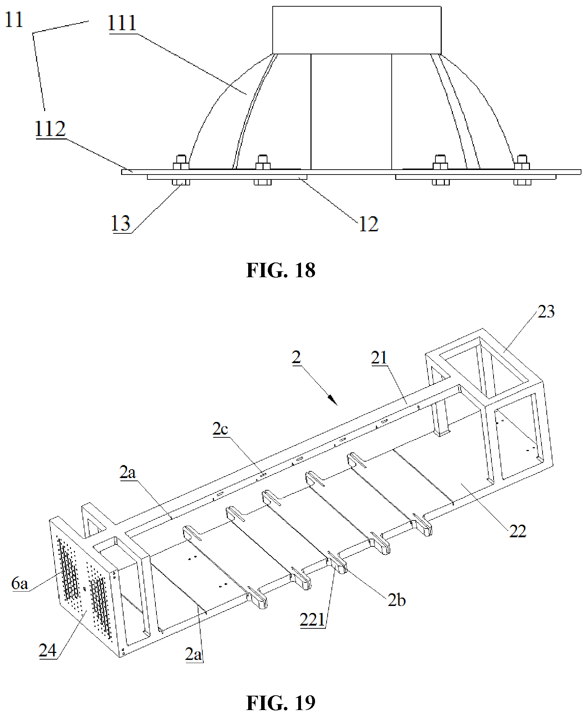

References are made to FIGS. 2, 14 to 18. FIG. 14 is a schematic structural view of a both-side-cavity preforming mold in the preforming tooling shown in FIG. 2, FIG. 15 is another schematic structural view of the preforming mold shown in FIG. 14, FIG. 16 is yet another schematic structural view of the preforming mold shown in FIG. 14, FIG. 17 is still another schematic structural view of the preforming mold shown in FIG. 14, and FIG. 18 is another schematic structural view of the preforming mold shown in FIG. 14.

FIGS. 14 to 18 show the preforming mold in the both-side-cavity preforming mold set, configured as a both-side-cavity preforming mold 1''. In the both-side-cavity preforming mold 1'', a core-mold clearance cavity 111b and two internal cavities 111a are formed inside the protrusion 111. The two internal cavities 111a are connected on left and right sides of the core-mold clearance cavity 111b, respectively. There are two adjustment plates 12 positioned in one-to-one correspondence with the internal cavities 111a. Each adjustment plate 12 is formed with a notch having an open end. The core-mold clearance portion 12a is partially defined by the notch. The notch is oriented toward the core-mold clearance cavity 111b when the adjustment plate 12 is connected to the preforming plate 11.

In this way, during operation, the core mold 02 for forming the central cavity extends through the core-mold clearance cavity 111b, while the core molds 02 for forming cavities on both sides pass through the internal cavities 111a in one-to-one correspondence. Left and right fabrics pass through the corresponding fabric guide openings 12b and are pre-formed under combined action of rearward traction force and the internal cavities 111a.

As can be seen from FIGS. 15 and 16, in this embodiment, the cavity inlet is not a regular circular shape. In the projection plane parallel to the adjustment plate 12, the contour line of the cavity inlet includes an outer arc-shaped segment, an inner vertical extension segment, and two inclined extension segments connect corresponding ends of the arc-shaped segment and the vertical extension segment. The vertical extension segment is common to the contour line of the cavity inlet and the contour line of the core-mold clearance cavity 111b.

Thus, a contour line of the cavity inlet is not limited in its shape, as long as it is in a matching arc shape at least at a position corresponding to the fabric guide opening 12b.

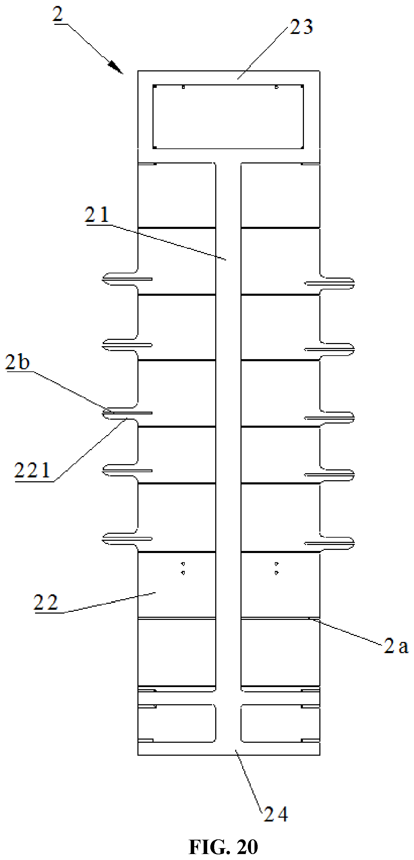

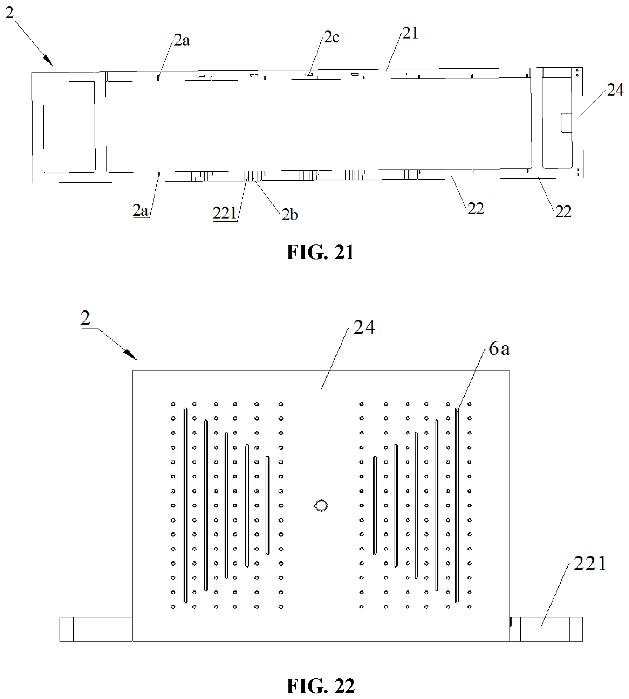

References are continually made to FIGS. 2, 19 to 22. FIG. 19 is a schematic structural view of a support frame in the preforming tooling shown in FIG. 2, FIG. 20 is another schematic structural view of the support frame in FIG. 19, FIG. 21 is yet another schematic structural view of the support frame in FIG. 19, and FIG. 22 is still another schematic structural view of the support frame in FIG. 19.

The preforming tooling according to the present application further includes a support frame 2. The support frame 2 includes an upper fixing portion 21 and a lower fixing portion 22. Each of the upper fixing portion 21 and the lower fixing portion 22 is formed with fixing slots 2a in their opposing side walls. Each fixing slot 2a extends laterally along the support frame 2 through two lateral end walls of the upper fixing portion 21 or the lower fixing portion. The preforming mold is mounted between the upper fixing portion 21 and the lower fixing portion 22, with upper and lower ends of the preforming plate 11 inserted into corresponding fixing slots 2a and being slidable in an extension direction of the fixing slots 2a.

In this way, during installation of the preforming molds, the upper and lower ends of each preforming mold may be inserted into the corresponding fixing slots 2a and slid in the extension direction of the fixing slots 2a until all preforming mold are positioned as required, and then the core mold 02 may be installed.

It can be understood that in an installation state, the core mold 02 is inserted into the internal cavity 111a of the preforming mold. Since the dimensions of the core-mold clearance portion 12a are close to those of the core mold 02, many inconveniences arises during the installation of the core mold 02. Further, when adjustments or repairs are required for the preforming mold, the core mold 02 must first be disassembled, and, after the preforming mold is adjusted or repaired, is reinstalled and readjusted, resulting in a prolonged construction cycle.

Based on this, to facilitate positioning and adjustment of the preforming mold, in both the central-cavity preforming mold 1 and the external-contour preforming mold 1', the preforming plate 11 may be cut into halves using wire cutting after its overall processing is completed, meaning that the preforming plate 11 includes a first plate part and a second plate part arranged laterally. The first plate part is formed with a first notched cavity, and the second plate part is formed with a second notched cavity. The aforementioned internal cavity 111a is defined by the first notched cavity and the second notched cavity when the first and second plate parts are mated together.

Thus, during installation, the height dimension of the core mold 02 may first be adjusted. Subsequently, the first plate part and the second plate part are inserted into two fixing slots 2a from the left and right sides respectively, and moved toward each other until they are brought together. Then, the first plate part and second plate part are connected together via the adjustment plate 12 to form a complete preforming plate 11. When adjustment or replacement of the preforming plate 11 is required, there is no need to disassemble the core mold 02. Instead, the adjustment plate 12 may be detached, and the first plate part and second plate part may be quickly removed by sliding them outward along the fixing slots 2a, enhancing convenience of adjustment operation.

In the both-side-cavity preforming mold 1'', the preforming plate 11 includes a first plate part and a second plate part arranged vertically. Each of the first plate part and the second plate part is formed with a first notched cavity located centrally and a second notched cavity located on each of left and right sides of the first notched cavity. The core-mold clearance cavity 111b is defined by corresponding first notched cavities of the first plate part and the second plate part, and the internal cavity 111a is defined by corresponding second notched cavities of the first plate part and the second plate part.

Moreover, the fixing slot 2a for mounting the both-side-cavity preforming mold 1" has a predetermined depth in a vertical direction. The first plate part is slidably mounted at its upper end in the fixing slot 2a located above, and can move vertically relative to the fixing slot 2a. The first plate part, when moved upward to a disengaged position, is offset vertically from the core mold 02.

The second plate part is slidably mounted at its lower end in the fixing slot 2a located below, and can move vertically relative to the fixing slot 2a. When moving downward to a disengaged position, the second plate part becomes offset vertically from the core mold 02.

A connecting component is also included and is connected at one end to the support frame 2, and is detachably connected at the other end to the first plate part or the second plate part.

With this arrangement, during installation, after the height dimension of the core mold 02 is adjusted, the first plate part and second plate part may be inserted into corresponding fixing slots 2a in an upper-lower arrangement. When the first plate part and second plate part are aligned, the first plate part moves downward while the second plate part moves upward until they are brought together. Then, the first plate part and the second plate part are connected together via the adjustment plate 12 to form a complete preforming plate 11. Finally, the first plate part or second plate part is connected to the connecting component, positioning the both-side-cavity preforming mold 1" at a required height.

When adjustment or replacement of the preforming plate 11 is required, there is no need to disassemble the core mold 02. First, the connecting component is disconnected from the first plate part/second plate part, and the adjustment plate 12 is removed. Then, the first plate part is pushed to move upward, and the second plate part is pushed to move downward. Once the first plate part is vertically offset from the core mold 02, and the second plate part is vertically offset from the core mold 02, each of the first plate part and the second plate part may be quickly removed by sliding outward along the fixing slot 2a, enhancing the convenience of adjustment operation.

The connecting component is not limited in its structure. For example, the connecting component may be a support rod. The support rod is fixed at its lower end to the lower fixing portion 22 of the support frame 2, and has a support wall at its upper end to support a lower side wall of the second plate part, thereby vertically limiting the position of the both-side-cavity preforming mold 1''. Or, the connecting component may be a suspension rod. The suspension rod is fixed at its upper end to the upper fixing portion 21 of the support frame 2, and has a connecting end at its lower end. The second plate part may be fixed to the connecting end by magnetic attractive force or by connectors such as bolts, thereby also vertically limiting the position of the both-side-cavity preforming mold 1''.

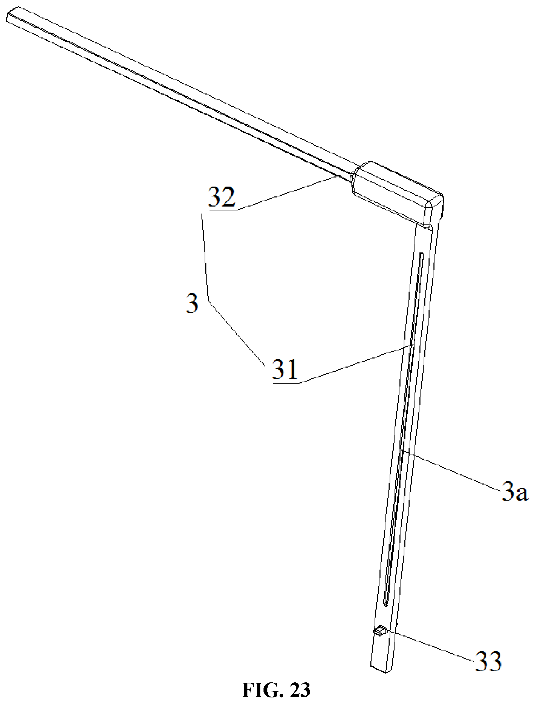

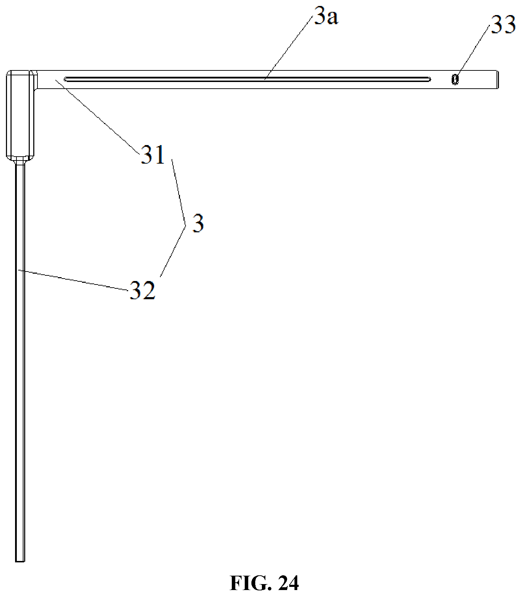

References are continually made to FIGS. 2, 23 to 24. FIG. 23 is a schematic structural view of a fabric adjustment rod in the preforming tooling shown in FIG. 2, and FIG. 24 is another schematic structural view of the fabric adjustment rod in FIG. 23.

As described above, during operation, the fabric 03 is fed through a fabric inlet plate 6 from the front end, and, under rearward traction force, gradually formed through corresponding preforming molds. When there is a relatively large distance between the fabric inlet plate 6 and the preforming mold located close to the rear end, an intermediate segment of the fabric 03 inevitably sags under its own weight. In this case, under the converging effect of the flared tubular preforming mold and the rearward traction force, the fabric 03 is highly susceptible to pultrusion-related damage, leading to failure of pultrusion.

Based on this, the preforming tooling according to the present application further includes five fabric adjustment rods 3 each formed with a fabric slot 3a extending vertically. Each fabric adjustment rod 3 is mounted on the support frame 2 in a laterally adjustable manner along the support frame 2, and is positioned in front of corresponding one of five preforming molds position at the rear end.

With this arrangement, during operation, the fabric 03 passes through the fabric slot 3a of a corresponding fabric adjustment rod 3 into the guide port 12b of a corresponding preforming mold. An extension direction of the fabric 03 is limited by the fabric adjustment rod 3, preventing interference between different fabrics 03. Moreover, the fabric adjustment rod 3 is adjusted in its lateral position to apply an outward tension force to the fabric 03, preventing the fabric 03 from sagging and thus avoiding damage during pultrusion, thereby ensuring smooth pultrusion operation.

As shown in FIGS. 1, 19, 23 to 24, the fabric adjustment rod 3 includes a vertical rod part 31 and a horizontal rod part 32 connected to an upper end of the vertical rod part 31. The fabric slot 3a is formed in the vertical rod part 31. The vertical rod part 31 is provided with a stopper 33 at its lower end. In the support frame 2, the lower fixing portion 22 is formed with protruding portions 221 extending laterally at its lateral ends. Each protruding portion 221 is formed with a mounting slot 2b having an open outer end and extending laterally. The upper fixing portion 21 is formed with a fixing hole 2c that extends laterally through it. In an installation state, the lower end of the vertical rod part 31 is inserted into a corresponding mounting slot 2b and can slide in the mounting slot 2b, the stopper 33 is in contact with an upper side wall of the lower fixing portion 22, and the horizontal rod part 32 is inserted into a corresponding fixing hole 2c and can slide into the fixing hole 2c.Thus, during adjustment, both the fixing hole 2c and the mounting slot 2b may serve as guides.

It can be understood that in practical applications, the fabric adjustment rod 3 is not limited to the particular structure in the above embodiment. For example, the fabric adjustment rod 3 may only include a vertical rod part 31, with stoppers 33 provided at both upper and lower ends of the vertical rod part 31. In the support frame 2, each of the upper fixing portion 21 and the lower fixing portion 22 may be provided with a protruding portion 221 extending laterally. The protruding portion 221 may be formed with a mounting slot 2b having an open outer end and extending laterally. In the installation state, the upper and lower ends of the vertical rod part 31 are inserted into corresponding mounting slots 2b and can slide in the mounting slots 2b, and the stopper 33 is in contact with an upper side wall of the upper fixing portion 21 or the lower fixing portion 22, serving as vertical positional limits.

In this embodiment, five fabric adjustment rods 3 are provided. It can be understood that the number of fabric adjustment rods 3 is not limited in practical applications. For instance, when the cavity thickness of the product to be formed is thin, fewer layers of fabric are needed during preforming, the distance between the fabric inlet plate 6 and the preforming mold is relatively small, and fabric sagging is insignificant, it is feasible to omit the fabric adjustment rod 3. When the fabric adjustment rod 3 is required, at least one rod may be provided.

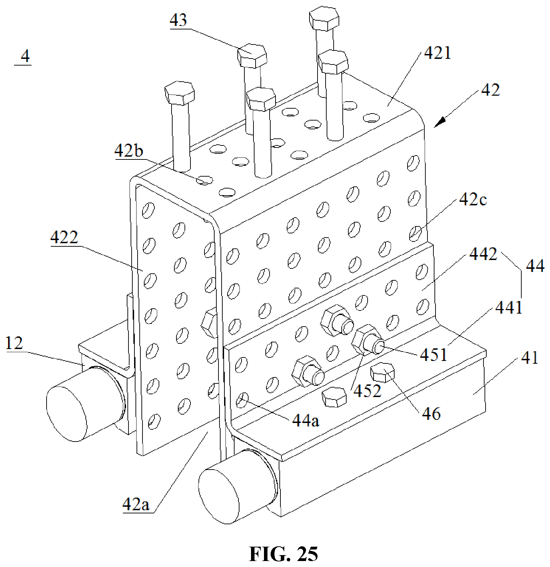

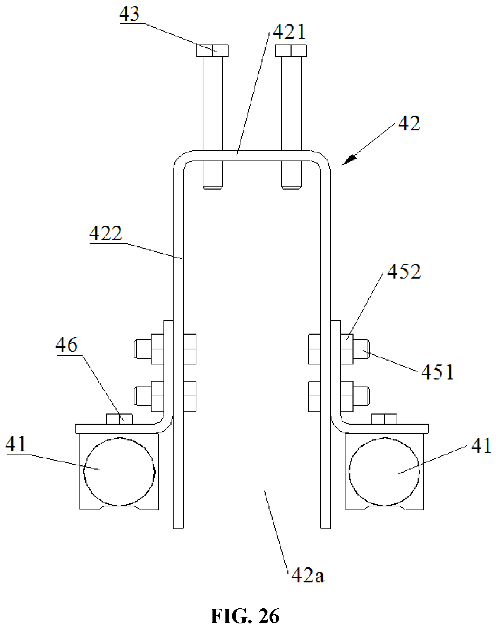

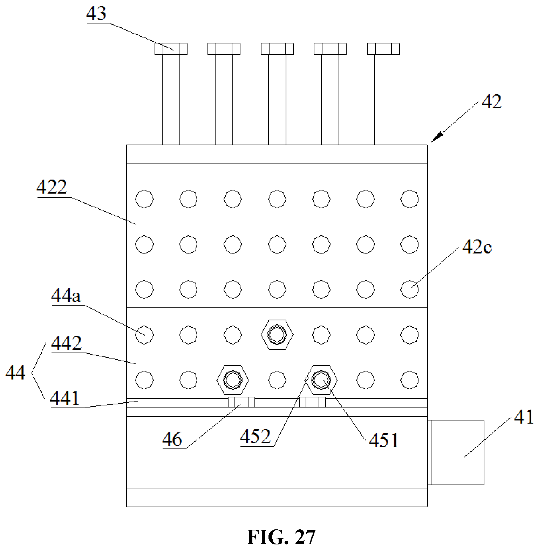

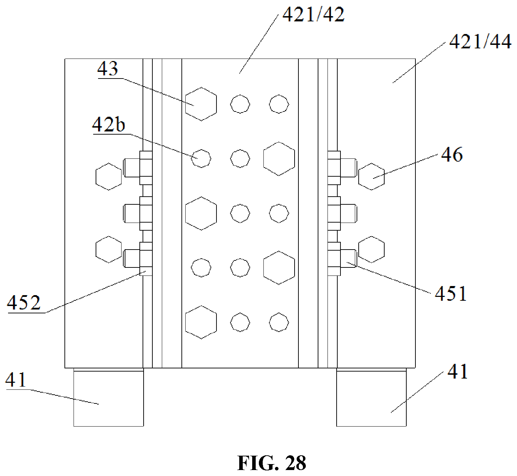

References are continually made to FIGS. 2, 25 to 28. FIG. 25 is a schematic structural view of a magnetic attraction device in the preforming tooling shown in FIG. 2, FIG. 26 is another schematic structural view of the magnetic attraction device in FIG. 25, FIG. 27 is yet another schematic structural view of the magnetic attraction device in FIG. 25, and FIG. 28 is still another schematic structural view of the magnetic attraction device in FIG. 25.

The preforming tooling according to the present application further includes a core-mold fixing part and a magnetic attraction device 4. The core-mold fixing part is mounted on the support frame 2 for fixing the core mold 02. The magnetic attraction device 4 is mounted at a rear upper end of the support frame 2. The magnetic attraction device 4 includes a magnetic mechanism 41 for magnetically attracting a tail end of the core mold 02 in a height-adjustable manner.

In conventional preforming tooling, the tail end of the core mold is suspended, resulting in insufficient support for the core mold, which causes excessive pulling force during pultrusion, accelerating wear and damage to the preforming tooling.

Based on this, the preforming tooling according to the present application includes the magnetic attraction device 4. The magnetic mechanism 41 is configured to magnetically attract the tail end of the core mold 02, providing a lifting force to the tail end. To ensure the concentricity of the core mold 02, it is necessary to adjust the height of the tail end of the core mold 02, which requires adjusting the magnitude of magnetic attractive force provided by the magnetic mechanism 41. Accordingly, in the present application, the magnetic mechanism 41 is configured to be height-adjustable. That is, the distance between the magnetic mechanism 41 and the core mold 02 is adjustable, thereby enabling adjustment of the magnitude of the magnetic attractive force provided by the magnetic mechanism 41. This ensures that the magnetic attractive force generated by the magnetic mechanism 41 is close to a predetermined magnitude, guarantees the concentricity of the core mold 02, reduces resistance during pultrusion, and mitigates wear and damage to the preforming tooling.

Specifically, in this embodiment, the magnetic attraction device 4 further includes a mounting base 42 and an adjustment component. The mounting base 42 is formed with a mounting cavity 42a with an open lower end. The adjustment component is connected to a closed end wall 421 of the mounting cavity 42a. The adjustment component has a lower end wall forming a support wall, which is positioned inside the mounting cavity 42a in a height-adjustable manner. The support frame 2 is provided with a support beam 23 at its rear upper end, which is positioned inside the mounting cavity 42a, and is in abutment with the support wall at its upper side wall. The magnetic mechanism 41 is connected to an outer side wall of the mounting base 42 in a height-adjustable manner.

With the above arrangement, the support wall is height-adjustable, so that a mounting height of the mounting base 42 relative to the support beam 23 may be adjusted by adjusting the height of the support wall, thereby enabling preliminary height adjustment of the magnetic mechanism 41. Furthermore, a mounting position of the magnetic mechanism 41 on the mounting base 42 is also height-adjustable, enabling further height adjustment of the magnetic mechanism 41. This ensures that the magnetic attractive force generated by the magnetic mechanism 41 is close to the predetermined magnitude, guaranteeing the concentricity of the product.

In this embodiment, the closed end wall 421 of the mounting cavity 42a is formed with a threaded hole 42b. The adjustment component includes an adjustment bolt 43 that is threaded into the threaded hole 42b.

Thus, the lower end wall of the adjustment bolt 43 forms a support wall. When it is necessary to adjust the mounting height of the mounting base 42, the support wall may be raised or lowered relative to the mounting base 42 by rotating the adjustment bolt 43. Specifically, when the support wall is raised relative to the mounting base 42, the support beam 23 becomes closer to the closed end of the mounting cavity 42a in the installation state, decreasing the mounting height of the mounting base 42; and when the support wall is lowered relative to the mounting base 42, the support beam 23 becomes closer to the open end of the mounting cavity 42a in the installation state, increasing the mounting height of the mounting base 42.

It can be seen that the mounting height of the mounting base 42 is adjusted by means of threaded engagement between the adjustment bolt 43 and the threaded hole 42b, which is convenient to operate and ensures a more reliable mounting position for the mounting bracket 42.

As can be seen from FIG. 25, in this embodiment, the closed end wall 421 of the mounting cavity 42a is formed with multiple threaded holes 42b which are spaced apart. The adjustment components include five adjustment bolts 43, which are arranged on the closed end wall 421 and spaced apart.

In practical applications, the number of threaded holes 42b formed in the closed end wall 421 of the mounting cavity 42a is not limited, nor is the number of adjustment components including adjustment bolts 43, as long as the mounting stability of the mounting base 42 is ensured.

Further, in practical applications, the adjustment component may be implemented in other ways. For instance, the adjustment components may include multiple blocks with different thicknesses and connectors. Each block is formed with a threaded hole in its upper side wall, and the closed end wall 421 of the mounting cavity 42a is formed with a corresponding through hole. The connector extends through the corresponding through hole and is threaded into the threaded hole, so as to detachably connect the block to an inner side of the closed end wall 421 of the mounting cavity 42a. A lower side wall of the block forms a support wall. When adjusting the mounting height of the mounting base 42, different blocks may be replaced. Specifically, when the mounting height of the mounting base 42 needs to be increased, a thicker block may be mounted such that the height of the support wall is lowered relative to the mounting base 42 and the support beam 23 becomes closer to the open end of the mounting cavity 42a in the installation state, increasing the mounting height of the mounting base 42; and when the mounting height of the mounting base 42 needs to be decreased, a thinner block may be mounted such that the height of the support wall relative to the mounting base 42 is increased and the support beam 23 is closer to the closed end of the mounting cavity 42a in the installation state, decreasing the mounting height of the mounting base 42.

As can be seen from FIG. 25, there are two magnetic mechanisms 41 in this embodiment, which are respectively connected to outer sides of two side walls 422 of the mounting cavity 42a.

In practical applications, the number of magnetic mechanisms 41 is not limited. For example, at least one magnetic mechanism 41 may be provided. The two magnetic mechanisms 41 are provided according to present application, enabling the magnetic attraction device 4 to generate double the attractive force, thereby ensuring reliable adsorption of the product.

As described above, the magnetic mechanism 41 is connected to the outer side of the side wall 422 of the mounting cavity 42a. Specifically, in this embodiment, as shown in FIG. 25, the magnetic attraction device 4 further includes a transition base 44. The magnetic mechanism 41 is fixed to the transition base 44. The transition base 44 is connected to the mounting base 42 in a height-adjustable manner, and may be fixed relative to the mounting base 42 when adjusted to a predetermined height.

Thus, the transition base 44 serves as an adapter. The magnetic mechanism 41 is fixed to the transition base 44 with reliable connection, ensuring a stable installation of the magnetic mechanism 41. Moreover, adjusting the connection position of the transition base 44 indirectly allows for height adjustment of the magnetic mechanism 41, facilitating operation.

The transition base 44 includes a first connecting portion 441 and a second connecting portion 442 joined at a right angle. The first connecting portion 441 extends horizontally, and the second connecting portion 442 extends vertically upward. The magnetic mechanism 41 is fixed to a lower side wall of the first connecting portion 441, and the second connecting portion 442 is adapted to connect with the mounting base 42. Specifically, each side wall 422 of the mounting cavity 42a is formed with multiple third connecting hole sets distributed vertically, each third connecting hole set having one or more third connecting holes 42c distributed horizontally. The second connecting portion 442 is formed with at least one fourth connecting hole 44a. There is at least one fastener extending through a corresponding fourth connecting hole 44a and any one of the third connecting holes 42c to secure the second connecting portion 442 to the mounting base 42.

Thus, when the connection height of the magnetic mechanism 41 is adjusted, the fastener may first be detached. At this point, the height of the magnetic mechanism 41 may be adjusted. Once the magnetic mechanism 41 is moved to a desired height, the fastener then passes through the fourth connecting hole 44a and the third connecting hole 42c at a corresponding height, re-securing the second connecting portion 442 to the mounting base 42, achieving the height adjustment of the magnetic mechanism 41.

Certainly, in practical applications, the connection means between the second connecting portion 442 and the mounting base 42 is not limited to the above embodiment. For example, the second connecting portion 442 may also be connected to the mounting base 42 through magnetic attraction, which provides a reliable connection and convenient adjustment.

As shown in FIG. 25, in this embodiment, the fastener includes a fastening bolt 451 and a fastening nut 452. The fastening bolt 451 extends through the corresponding fourth connecting hole 44a and third connecting hole 42c, and the fastening nut 452 is threaded to the fastening bolt 451.

In practical applications, both the third connecting hole 42c and the fourth connecting hole 44a may be threaded holes. In this case, the fastener may include only the fastening bolt 451, which is threaded into both the corresponding third connecting hole 42c and fourth connecting hole 44a.

In this embodiment, the second connecting portion 442 extends vertically upward, with the magnetic mechanism 41 fixed to the lower side wall of the first connecting portion 441. In practical applications, it is also feasible for the second connecting portion 442 to extend vertically downward, with the magnetic mechanism 41 fixed to an upper side wall of the first connecting portion 441.

As described above, the magnetic mechanism 41 is fixed to the transition base 44. Specifically, the magnetic mechanism 41 may be fixed to the transition base 44 via welding, snap-fitting, adhesive bonding, or other means, or using a connector. Specifically, the first connecting portion 441 is formed with at least one through hole, and the magnetic mechanism 41 is formed with at least one threaded connecting hole. The connector includes a connecting bolt 46, which extends through the through hole and is threaded into a corresponding threaded connecting hole.

It can be seen that there are two connecting bolts 46 in this embodiment. In practical applications, the number of connecting bolts 46 is not limited, as long as the connection stability of the magnetic mechanism 41 is ensured.

It can be understood that in practical applications, the magnetic attraction device 4 is not limited to the implementation manner described in this embodiment. For example, the magnetic attraction device 4 may be alternatively implemented as an electromagnet, which is configured to automatically adjust the magnitude of the magnetic attractive force according to the length dimension of the core mold 02 to ensure the concentricity of the core mold 02. This significantly reduces labor required for mold adjustment, improves production efficiency, and achieves automated pultrusion operation.

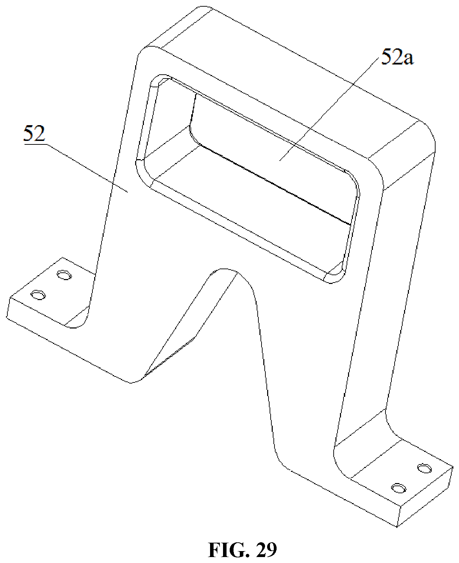

References are made to FIGS. 2 and 29. FIG. 29 is a schematic structural view of a core-mold adjustment base in the preforming tooling shown in FIG. 2.

In the present application, the core-mold fixing part includes a core-mold support base 51 located at a front end of the support frame 2 and a core-mold adjustment base 52 located at a rear end of the support frame 2. The core-mold adjustment base 52 is formed with an accommodation hole 52a. During operation, the core mold 02 for forming the central cavity is fixed at its front end to a front end plate 24 of the support frame 2 via connectors such as bolts, and is supported at its intermediate segment by the core-mold support base 51, and is inserted at its rear end into the accommodation hole 52a of the core-mold adjustment base 52. The core mold 02 for forming the side cavities is supported at its front end by the core-mold support base 51 and fixed to the core-mold support base 51 via connectors such as bolts, and is inserted at its rear end into the accommodation hole 52a of the core-mold adjustment base 52.

In a theoretical installation state, a predetermined clearance is present between an inner peripheral wall of the accommodation hole 52a and a corresponding end wall of the core mold 02. Thus, by measuring the distance between the inner wall of the accommodation hole 52a and the corresponding end wall of the core mold 02, it is possible to determine whether the core mold 02 is in the theoretical installation state, which allows for timely position adjustment of the core mold 02 and further ensures the subsequent pultrusion process proceeds smoothly.

As can be seen from FIG. 29, in this embodiment, the core-mold adjustment base 52 is formed with two connecting lugs at its lower end. The connecting lug is formed with a connecting hole, while the lower fixing portion 22 of the support frame 2 is correspondingly formed with a threaded hole. A connector, such as a screw, extends through a corresponding through hole and is threaded into the corresponding threaded hole, thereby securing the core-mold adjustment base 52 to the support frame 2.

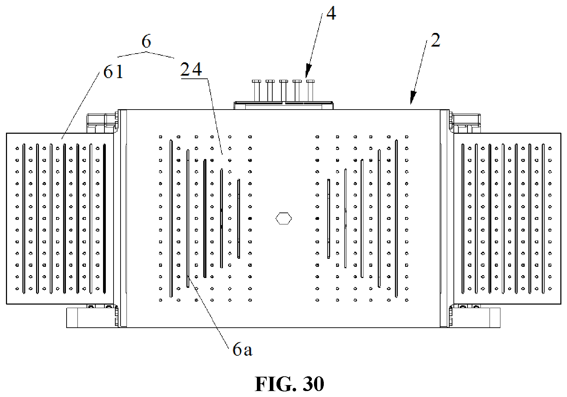

References are continually made to FIGS. 2 and 30. FIG. 30 is another schematic structural view of the preforming tooling shown in FIG. 2.

In the preforming tooling according to the present application, the front end plate 24 of the support frame 2 is formed with multiple elongated holes extending vertically, with the length of the elongated holes progressively increasing from the center toward both ends of the front end plate 24. The front end plate 24 is connected at both ends to two extension plates 61, which are also formed with multiple elongated holes extending vertically. The fabric inlet plate 6 is defined by the front end plate 24 and the two extension plates 61, with the elongated hole constituting the fabric inlet 6a. Each fabric guide opening 12b is arranged corresponding to one of the fabric inlets 6a.

Thus, during operation, the fabric passes through the fabric inlet 6a into the preforming tooling and then passes through a corresponding fabric guide opening 12b into a corresponding preforming mold. Moreover, the length of the fabric inlet 6a in the front end plate 24 progressively increases from the center toward both ends of the front end plate 24, so that the fabric inlet 6a is better matched to the corresponding fabric, ensuring the fabric does not shift during preforming process.

Moreover, as can be seen from FIG. 2, in this embodiment, the extension plate 61 is fixedly connected to the front end plate 24 via fasteners such as bolts, which provides a reliable connection. When different products are preformed, different extension plates 61 may be replaced as needed, enhancing versatility of the preforming tooling according to the present application.

It can be understood that the fabric inlet plate 6 is not limited to the combination of the front end plate 24 and extension plates 61 as described above. For example, the fabric inlet plate 6 may be a separate plate-like structure mounted on the support frame 2 and positioned in front of each preforming mold. In this case, no front end plate 24 is provided on the support frame 2, avoiding interference with the fabric.

The present application further provides a preforming method using the preforming tooling as described above. In the same preforming mold set, each preforming mold is configured to pre-form one layer of fabric. During operation, the innermost layer of fabric is pre-formed through the foremost preforming mold, and then an adjacent outer layer of fabric is pre-formed through an adjacent rearward preforming mold, and so on, sequentially forming from inner to outer layers.

The preforming method according to the present application is implemented based on the preforming tooling as described above, and thus offers the same technical effects as the preforming tooling as described above, which will not be repeated herein.

The preforming tooling and the preforming method according to the present application are described in detail hereinbefore. The principle and embodiments of the present application are described through specific examples herein. The description of the above embodiments is merely used to facilitate understanding the method and core idea of the present application. It should be noted that, several improvements and modifications may be made by those skilled in the art to the present application without departing from the principle of the present disclosure, and these improvements and modifications also fall within the protection scope of the claims of the present application.

## Claims

1. A preforming tooling, comprising at least one preforming mold set, wherein each preforming mold set comprises one or more preforming molds arranged sequentially from front to back and configured to form the same structural portion of a product,
each preforming mold has a protrusion extending from front to back and shaped as an axially-through flared tube, with its cross-sectional area decreasing gradually from front to back,
an internal cavity is formed inside the protrusion, which comprises a core-mold accommodating zone and a fabric preforming zone located around the core-mold accommodating zone,
the preforming mold is formed at its front side wall with a core-mold clearance portion and a fabric guide opening extending circumferentially along the core-mold clearance portion, with the core-mold clearance portion corresponding to the core-mold accommodating zone and the fabric guide opening corresponding to the fabric preforming zone, and
the internal cavity has a cavity outlet at its rear end opening, and in the same set of preforming molds from front to back, circumferential lengths of a plurality of fabric guide openings are progressively increased, and cross-sectional areas of a plurality of cavity outlets are progressively increased.

2. The preforming tooling according to claim 1, wherein the preforming mold comprises a preforming plate and an adjustment plate, the preforming plate has a central portion that extends from front to back to form the protrusion, and the adjustment plate is formed with the core-mold clearance portion and the fabric guide opening, and is connected to a front side wall of the preforming plate in a circumferentially adjustable manner.

3. The preforming tooling according to claim 1, wherein the fabric guide opening is an arc-shaped hole, the internal cavity has a cavity inlet at its front end opening, and a contour line of the cavity inlet is in a matching arc shape at least at a position corresponding to the fabric guide opening.

4. The preforming tooling according to claim 2, wherein the preforming mold set comprises a central-cavity preforming mold set, and the preforming mold in the central-cavity preforming mold set is configured as a central-cavity preforming mold,
the internal cavity formed inside the protrusion of the central-cavity preforming mold has a circular cavity inlet at its front end opening, and
the core-mold clearance portion in the adjustment plate is of a hole-like structure matching in shape with the cavity outlet.

5. The preforming tooling according to claim 4, wherein the preforming mold set further comprises an external-contour preforming mold set, and the preforming mold in the external-contour preforming mold set is configured as an external-contour preforming mold,
the internal cavity formed inside the protrusion of the external-contour preforming mold has a circular cavity inlet at its front end opening,
the core-mold clearance portion in the adjustment plate is of a hole-like structure matching in shape with the cavity outlet, and
the adjustment plate is formed with two fabric guide openings positioned on left and right sides of the core-mold clearance portion.

6. The preforming tooling according to claim 5, wherein the external-contour preforming mold set comprises a plurality of external-contour preforming molds, and each of alternating external-contour preforming molds is interrupted circumferentially to form an observation region at each interruption location.

7. The preforming tooling according to claim 5, wherein the protrusion is formed with an adhesive injection port at an end close to the cavity outlet, and
the protrusion is formed with a reservoir in its inner wall at the end close to the cavity outlet, the reservoir extends circumferentially along the protrusion, and the adhesive injection port is in communication with the reservoir.

8. The preforming tooling according to claim 5, wherein in both the central-cavity preforming mold and the external-contour preforming mold, the preforming plate comprises a first plate part and a second plate part arranged laterally, the first plate part is formed with a first notched cavity, the second plate part is formed with a second notched cavity, and the internal cavity is defined by the first notched cavity and the second notched cavity when the first plate part and the second plate part are mated together.

9. The preforming tooling according to claim 5, wherein the preforming mold set comprises a both-side-cavity preforming mold set, and the preforming mold in the both-side-cavity preforming mold set is configured as a both-side-cavity preforming mold,
in the both-side-cavity preforming mold, the protrusion is internally partitioned into a core-mold clearance cavity and two internal cavities connected on left and right sides of the core-mold clearance cavity respectively, and
there are two adjustment plates positioned in one-to-one correspondence with the internal cavities, each adjustment plate is formed with a notch having an open end, the core-mold clearance portion is partially defined by the notch, and the notch is oriented toward the core-mold clearance cavity when the adjustment plate is connected to the preforming plate.

10. The preforming tooling according to claim 9, wherein in the both-side-cavity preforming mold, the preforming plate comprises a first plate part and a second plate part arranged vertically, each of the first plate part and the second plate part is formed with a first notched cavity located centrally and a second notched cavity located on each of left and right sides of the first notched cavity, the core-mold clearance cavity is defined by corresponding first notched cavities of the first plate part and the second plate part, and the internal cavity is defined by corresponding second notched cavities of the first plate part and the second plate part.

11. The preforming tooling according to claim 9, wherein there are three preforming mold sets, comprising a central-cavity preforming mold set, a both-side-cavity preforming mold set and an external-contour preforming mold set arranged sequentially from front to back.

12. The preforming mold according to claim 2, wherein the preforming plate is formed with a plurality of first connecting holes distributed circumferentially, and the adjustment plate is formed with a plurality of second connecting holes distributed circumferentially, and
there are connectors extending through corresponding first and second connecting holes to secure the preforming plate and the adjustment plate.

13. The preforming tooling according to any one of claims 1 to 12, further comprising a support frame, wherein the support frame comprises an upper fixing portion and a lower fixing portion, the upper fixing portion and the lower fixing portion each are formed with a fixing slot extending laterally along the support frame through their two lateral end walls, and
the preforming mold is mounted between the upper fixing portion and the lower fixing portion, with upper and lower ends of the preforming plate inserted into corresponding fixing slots of the upper fixing portion and the lower fixing portion.

14. The preforming tooling according to claim 13, wherein the preforming mold set comprises a central-cavity preforming mold set, and the preforming mold in the central-cavity preforming mold set is configured as a central-cavity preforming mold,
the preforming mold set further comprises an external-contour preforming mold set, and the preforming mold in the external-contour preforming mold set is configured as an external-contour preforming mold,
in both the central-cavity preforming mold and the external-contour preforming mold, the preforming plate comprises a first plate part and a second plate part arranged laterally, the first plate part is formed with a first notched cavity, the second plate part is formed with a second notched cavity, and the internal cavity is defined by the first notched cavity and the second notched cavity when the first plate part and the second plate part are mated together, and
each of the first plate part and the second plate part is slidable in an extension direction of the fixing slot at its upper and lower ends.

15. The preforming tooling according to claim 13, wherein the preforming mold set comprises a both-side-cavity preforming mold set, and the preforming mold in the both-side-cavity preforming mold set are configured as a both-side-cavity preforming mold,
in the both-side-cavity preforming mold, the preforming plate comprises a first plate part and a second plate part arranged vertically, each of the first plate part and the second plate part is formed with a first notched cavity located centrally and a second notched cavity located on each of left and right sides of the first notched cavity, the core-mold clearance cavity is defined by corresponding first notched cavities of the first plate part and the second plate part, and the internal cavity is defined by corresponding second notched cavities of the first plate part and the second plate part,
the fixing slot for mounting the both-side-cavity preforming mold has a predetermined depth in a vertical direction, the first plate part is slidably mounted at its upper end in the fixing slot located above, and is movable vertically relative to the fixing slot located above, and the first plate part, when moved upward to a disengaged position, becomes offset vertically from a core mold,
the second plate part is slidably mounted at its lower end in the fixing slot located below, and is movable vertically relative to the fixing slot located below, and the second plate part, when moved downward to a disengaged position, becomes offset vertically from the core mold, and
there is a connecting component, which is connected at one end to the support frame and is detachably connected at the other end to the first plate part or the second plate part.

16. The preforming tooling according to claim 13, further comprising one or more fabric adjustment rods each of which is formed with a fabric slot extending vertically, wherein each fabric adjustment rod is mounted on the support frame in a laterally adjustable manner along the support frame, and is positioned in front of a corresponding preforming mold.

17. The preforming tooling according to claim 13, further comprising a core-mold fixing part and a magnetic attraction device, wherein the core-mold fixing part is mounted on the support frame for fixing a core mold, the magnetic attraction device is mounted at a rear upper end of the support frame, and comprises a magnetic mechanism for magnetically attracting a tail end of the core mold in a height-adjustable manner.

18. The preforming tooling according to claim 17, wherein the magnetic attraction device further comprises a mounting base and an adjustment component, wherein the mounting base is formed with a mounting cavity with an open lower end, the adjustment component is connected to a closed end wall of the mounting cavity, and the adjustment component has a lower end wall forming a support wall, which is positioned inside the mounting cavity in a height-adjustable manner, and
the support frame is provided with a support beam at its upper rear end, which is positioned inside the mounting cavity and is in abutment with the support wall at its upper side wall, and the magnetic mechanism is connected to an outer side wall of the mounting base in a height-adjustable manner.

19. The preforming tooling according to claim 18, wherein the closed end wall of the mounting cavity is formed with a threaded hole, and the adjustment component comprises an adjustment bolt that is threaded into the threaded hole.

20. The magnetic attraction device according to claim 18, wherein there are two magnetic mechanisms, which are respectively connected to outer sides of two side walls of the mounting cavity.

21. The magnetic attraction device according to claim 18, further comprising a transition base, wherein the magnetic mechanism is fixed to the transition base, the transition base is connected to the mounting base in a height-adjustable manner, and the transition base is configured to be fixed relatively to the mounting base when adjusted to a predetermined height.

22. The magnetic attraction device according to claim 21, wherein the transition base comprises a first connecting portion and a second connecting portion joined at a right angle, the first connecting portion extends horizontally and the second connecting portion extends vertically, the magnetic mechanism is fixed to the first connecting portion, and the second connecting portion is adapted to connect with the mounting base.

23. The magnetic attraction device according to claim 21, wherein each side wall of the mounting cavity is formed with a plurality of third connecting hole sets distributed vertically, each having one or more third connecting holes distributed horizontally, and
the second connecting portion is formed with at least one fourth connecting hole, there is at least one fastener extending through a corresponding fourth connecting hole and any one of the third connecting holes to secure the second connecting portion to the mounting base.

24. The magnetic attraction device according to claim 23, wherein the fastener comprises a fastening bolt and a fastening nut, the fastening bolt extends through the corresponding fourth connecting hole and third connecting hole, and the fastening nut is threaded to the fastening bolt.

25. The magnetic attraction device according to claim 21, further comprising at least one connector, wherein the magnetic mechanism is fixed to the first connecting portion via the connector.

26. The magnetic attraction device according to claim 25, wherein the first connecting portion is formed with at least one through hole, the magnetic mechanism is formed with at least one threaded connecting hole, and the connector comprises a connecting bolt, which extends through the through hole and is threaded into a corresponding threaded connecting hole.

27. The preforming tooling according to claim 17, wherein the core-mold fixing part comprises a core-mold adjustment base located at a rear end and formed with an accommodation hole, the core mold is inserted at its rear end into the accommodation hole, and in a theoretical installation state, a predetermined clearance exists between an inner peripheral wall of the accommodation hole and a corresponding end wall of the core mold.

28. The preforming tooling according to any one of claims 1 to 12, further comprising a fabric inlet plate positioned in front of each preforming mold, wherein the fabric inlet plate has one or more fabric inlets, and each fabric guide opening is arranged corresponding to one of the fabric inlets.

29. A preforming method using the preforming tooling according to any one of claims 1 to 28, wherein in the same preforming mold set, each preforming mold is configured to pre-form one layer of fabric, and
during operation, an innermost layer of fabric is pre-formed through a foremost preforming mold, and then an adjacent outer layer of fabric is pre-formed through an adjacent rearward preforming mold, and so on, sequentially forming from inner to outer layers.
